(19) Europäisches Patentamt
European Patent Office
Office européen des brevets

(11) EP 2 046 606 B1

(12) EUROPEAN PATENT SPECIFICATION

(45) Date of publication and mention
of the grant of the patent:
**07.07.2010 Bulletin 2010/27**

(51) Int Cl.:
**B60R 13/08** $^{(2006.01)}$ **G10K 11/16** $^{(2006.01)}$
**B32B 7/02** $^{(2006.01)}$

(21) Application number: **06776592.5**

(22) Date of filing: **03.08.2006**

(86) International application number:
**PCT/EP2006/007706**

(87) International publication number:
**WO 2008/014808 (07.02.2008 Gazette 2008/06)**

(54) **REDUCTION OF TRANSFER OF VIBRATIONS**

VERRINGERUNG VON SCHWINGUNGSÜBERTRAGUNG

RÉDUCTION DE TRANSFERT DE VIBRATIONS

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**15.04.2009 Bulletin 2009/16**

(73) Proprietor: **Henkel AG & Co. KGaA
40589 Düsseldorf (DE)**

(72) Inventors:
• **MERLETTE, Nicolas
58150 Suilly la Tour (FR)**
• **BELLÉ, Philippe
18300 Bannay (FR)**

(56) References cited:
**EP-A- 0 077 987    EP-A- 0 412 816
EP-A- 1 323 523    EP-A- 1 772 480
WO-A-80/01550**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to the reduction of the transfer of vibrations generated by a vibration generator.

In a vehicle, the transfer of vibrations generated by a dynamic force generator, such as an engine, a motor, a pump or a gear box, via structural elements to an emitting surface such as a panel, leads to the emission of structure borne noise.

Different solutions have been suggested in order to at least reduce such structure borne noise. In vehicle construction, passive measures such as the recourse to vibration dampers or dampening mats have been proposed. Such dampening mats are often applied on vibrating panels, e.g. in the doors or on the floor of a vehicle. The extent of noise reduction of these methods is satisfactory, but their drawbacks are numerous.

In the conventional process mixtures of bitumen or asphalt and fillers with a high specific weight are extruded into sheets, from which the appropriate shapes are punched or cut. These sheets are then bonded to the appropriate metal sheet parts and must sometimes also be adapted to the shape of the sheet by heating. Although these bitumen sheets are still frequently used because of their low material cost, they are very brittle and tend to peel off from the metal sheet particularly at low temperatures. Also incorporation of additives which has often been proposed only results in a slight improvement which is not sufficient for many applications. Moreover, it is completely impossible to apply the preformed bitumen parts to the complex-shaped or almost inaccessible metal sheet parts of machines or vehicles, e.g. the inner surfaces of the cavities of motor vehicle doors. In addition there is the further disadvantage that in many cases several punched parts are required for only one vehicle or appliance and therefore costly storage is required.

There has consequently been no lack of attempts to eliminate the disadvantages of bitumen sheets using other polymer systems. For example, aqueous polymer dispersions of polyvinylacetate or ethylene- vinylacetate copolymers containing fillers were developed which can be sprayed on to the metal sheet parts with the necessary coating thickness. These systems are, however, disadvantageous for industrial use when there are high rates of production because the water cannot be removed rapidly enough from the coating that is sprayed on, particularly when this coating is fairly thick.

The sound damping properties of polymer coatings are best in the range of the glass transition temperature of the polymer system, because due to the viscoelasticity of the polymer in this temperature range the mechanical energy of the vibration process is converted into heat by molecular flow phenomena. Conventional sprayable coating materials based on PVC plastisols, which e.g. are widely used as an underbody coating in motor vehicle construction, have no notable sound damping effect in the application temperature range of -20 to +60° C. because the maximum value of the glass transition is about -20° C. to - 50° C. depending on the proportion of plasticizer.

Attempts were therefore made to modify these conventional PVC plastisols so that they would have better sound damping properties in the application temperature range of -20° C. to +60° C. Coatings are known from German published patent application 35 14 753 which contain multiple- unsaturated compounds, e.g. di- or triacrylate, peroxide crosslinking agents and inorganic fillers, in conventional PVC plastisols. In the hardened state these plastisols are, however, glass-hard and brittle, and are therefore not really suitable for use in automobile construction because they do not have sufficient flexibility particularly at low temperatures. Apart from this these formulations have a very low loss factor tan $\delta$ and thus the sound damping effect is not very marked.

Compositions are described in German published patent application 34 44 863 which contain PVC or vinylchloride/vinylacetate copolymers, optionally methylmethacrylate homopolymers or copolymers, a plasticizer mixture and inert fillers. The plasticizer mixture comprises plasticizers which are compatible with the methymethacrylate polymers and plasticizers for the vinylchloride polymers which are incompatible with the methacrylate polymers which may be present. The plastisols thus obtained have improved sound damping properties compared with conventional PVC plastisols. However, particularly at temperatures above about 30° C. the sound damping effect drops again. If an attempt is made to shift the range of the maximum loss factor tan $\delta$ to higher temperatures by varying the relative quantities of the individual components, the cold flexibility of the coating drops very severely. A reduced cold flexibility is, however, precisely what is disadvantageous in vehicle construction. In addition the loss factor decreases very severely at lower temperatures with these formulations. These plastisol compositions therefore have a sufficiently high loss factor only in a very narrow temperature range.

Furthermore, active control methods for reducing structure borne noise have been developed. These methods usually employ sensors, signal processing, actuators, and power sources to counteract or effectively increase the dissipation of the vibration by producing corresponding forces or strains.

Although active control methods have been shown to effectively reduce structure borne noise, they require sophisticated technical equipment, especially with respect to signal processing and sensors. This does not only increase the costs, but also leads to an increased risk of breakdown.

Therefore, there is a need for economic means for effectively reducing structure borne noise in a system, especially in a vehicle.

In the European Patent Application EP 1772480 A there is disclosed a dissipative vibratory wave barrier comprising a carrier having an inner surface and an outer surface, the carrier having a polygonal section, especially rectangular, optionally U-shaped and comprising on its outer surface a coating comprising a thermo-expandable material selected among those which, after expansion and at a temperature between -10 and +40°C, have a Young modulus E between 0,1 MPa and 1000 MPa, a loss modulus E" between 0,5 and 1 and a Shear modulus G between 0,1 MPa and 500 MPa. The moduli, especially the loss modulus, are usually determined by dynamic mechanical analysis (DMA).

Although the known dissipative vibratory wave barrier shows excellent vibration damping efficiency in some applications a problem exists in cases where the structure to be damped is very stiff. Because of the need of a very stiff carrier in the known dissipative vibratory wave barrier which should have at least similar stiffness than the structure to be damped this results in very massive carriers which is often not acceptable for cost and lightweight reasons, especially in automotive applications.

A dissipative vibration damping device according to the preamble of claim 1 is known from EP 0077987 A.

It is therefore an object of the present invention to overcome the drawbacks of the prior art.

According to the invention there is proposed a dissipative vibration damping device, comprising a carrier having an inner surface and an outer surface, the carrier being comprising on at least one surface thereof a bonding layer, wherein the carrier is dissipative and has a damping loss factor of at least 0,2 and wherein the bonding layer is made of a rigid material with higher stiffness than the carrier.

Since the carrier of the dissipative vibration damping device according to the invention is the dissipative element, the carrier is deformed by the vibrations of the treated structure and absorbs and dissipates the vibrations generating mostly heat. According to this there is no need to provide a carrier with high stiffness even in cases where the treated structure inhibits such high stiffness, thus leading to very lightweight and economical interesting dissipative vibration damping devices.

The bonding material of the dissipative vibration damping device according to the invention is made of a rigid material and serves to securely connect the dissipative vibration damping device to the treated structure and to transfer the vibrations from the treated structure to the dissipative carrier.

The carrier of the dissipative vibration damping device according to the invention can be made of any suitable material showing the requested dissipative characteristics.

According to a first preferred embodiment of the invention the carrier is made of a synthetic material, optionally fiber re-enforced, and especially of a thermoplastic synthetic material, selected within the group consisting of polyamides (PA), polyphenylene sulphide (PPS), polyphenylene ether (PPE), polyphenylene sulfone (PPSU) and polyphenyle-imide (PPI), the thermoplastic synthetic material being optionally fiber re-enforced, having a low water absorption and a stability of dimension up to 180°C.

As a second preferred embodiment of the invention the carrier is made of a viscoelastic sandwich material of at least two layers.

Examples of the viscoelastic sandwich material comprise at least one layer made of metal, and especially of steel or of aluminium and at least one layer based on a viscoelastic rubber material.

The viscoelastic rubber material preferably has a thickness of 1.4 to 1.8 mm and/or a loss factor according to DIN 53440 of at least 0.10 in a temperature range of -15°C to +65 °C and/or an area weight of 1.0 to 2.0 kg/m$^2$, preferably 1.2 kg/m$^2$.

For excellent vibration damping efficiency the carrier of the dissipative vibration damping device according to the invention has a damping loss factor of at least 0.5.

Generally, the loss factors of a system can be defined as

$$\eta(\omega) = \frac{\Delta E}{E_{SE}},$$

where $E_{SE}$ is the strain energy, $\Delta E$ is the energy dissipated from damping and $\eta$ is the damping loss factor in the frequency band w considered. Therefore, $\eta$ is equal to the rate of the strain energy dissipated per cycle.

When the damping loss factor $\eta$ is for example equal to 0.2, it means that 20 % of the initial energy used to excite the material is dissipated during the first cycle. A damping loss factor higher than 1 will mean that the material dissipates all the energy in less than 1 cycle.

One way of measurement can be the use of a DMA (Dynamic Mechanical Analyzer) where a sample is excited on one edge and the response is measured on the other. In that case the damping loss factor $\eta$ is

$$\eta = tan(\delta)$$

where $\delta$ is the phase difference between the excitation and the response.

Any suitable material providing rigid characteristics with good adherence both to the carrier and the structure to be treatened and good transfer of the vibrations to the dissipative carrier can be used as the bonding layer according to the invention.

A preferred embodiment of the bonding layer according to the invention comprises a two-component epoxy resin foam having a density in uncured state of 0.75 to 0.95 kg/m$^3$ and a water absorption of less than 5%.

For sufficient rigidity the bonding layer preferably has a compression strength of at least 10.5 MPa.

Further, the bonding layer can be made of a material which is expandable upon heating with an expansion ratio of 55 to 65 %. Such expandable bonding layer allows the introduction of the dissipative damping device according to the invention into a structure or fixation onto a structure with a clearance there between which will be closed upon heating of the equipped structure due to the expansion of the bonding layer.

The bonding layer may have a young modulus of 1 to 10,000 MPa, preferably 500 to 2,000 MPa.

The present invention also relates to a system comprising a structural element, e.g. an automotive part, and a dissipative vibration damping device as described above, wherein the dissipative vibration damping device is connected to the structural element by the bonding layer of the dissipative vibration damping element and the carrier thereof having a stiffness lower than the stiffness of the structural element for effective dissipative operation.

The present invention also relates to a method for reducing the transfer of vibrations from a vibration generator to a location to which the vibration generator is connected via a structural element, comprising equipping said structural element with means for dissipating vibrational energy generated by the vibration generator, characterized in that the means for dissipating vibrational energy comprise a dissipative vibration damping device according to the present invention as described here above.

Examples of vibration generators include motors, engines, pumps, gear boxes, suspension dampers and springs.

The method according to the present invention is particularly adapted for reducing structure borne noise in an automobile vehicle. In this case the vibration generator is connected to at least one of the constitutive parts of the passenger compartment of said vehicle via a structural element. The shape of the structural element is that of a tubular rail with a polygonal, preferably rectangular cross-section.

The method according to the present invention comprises successively,

- selecting a dissipative vibration damping device according to the present invention having dimensions such that it can be inserted into or fixed onto the structural element, with the stiffness of the carrier being lower than the stiffness of the structural element,
- inserting the dissipative vibration damping device into or fixing the dissipative vibration damping device onto the structural element in a location close to the vibration generator and connecting the dissipative vibration damping device with the structural element by the bonding layer.

Advantageously, the bonding layer is expanded upon heating in a successive heating step.

Advantageously, the dissipative vibration damping device is selected such that a clearance of about 1 to 20 mm between the surface of the dissipative vibration damping device facing the surface of the structural element is obtained and the clearance is closed upon heating.

The dissipative vibration damping device is preferably inserted into the structural element as close as possible from the vibration generator and before the receiving vibrating structure from which the sound is generated.

Expansion of the expandable material is obtained by a heating step.

Depending on the nature of the bonding material and the line conditions at the assembly line, the heating step is carried out at a temperature from 130°C to 240°C, preferably from 150°C to 200°C with a residence time in the oven from residence about 10 min. to about 30 min.

It is advantageous to take benefit of the heating step that follows the passage of the vehicle parts in the generally used electro coating bath (E-coat bath) to cause expansion of the bonding layer as the temperature during this heating step is generally sufficient to cause the expected expansion.

The thickness of the bonding layer that is applied to the carrier is selected such that, after expansion, its volume occupies the clearance between the carrier and the respective surface of the structural element thus ensuring a secure connection and good vibration transfer to the dissipative carrier.

The above and other objects, features and advantages of the present invention will become more apparent from the following description of preferred embodiments, reference being made to the accompanying figures, in which

Figure 1 is a schematic side view of a dissipative vibration damping device according to the present invention being connected to a structural member of an automobile,

Figure 2 is a schematic perspective view of a carrier used in the dissipative vibration damping device according to the present invention,

Figure 3 is a graph showing three curves representing the variation of the structure borne noise in a car body as a function of frequency.

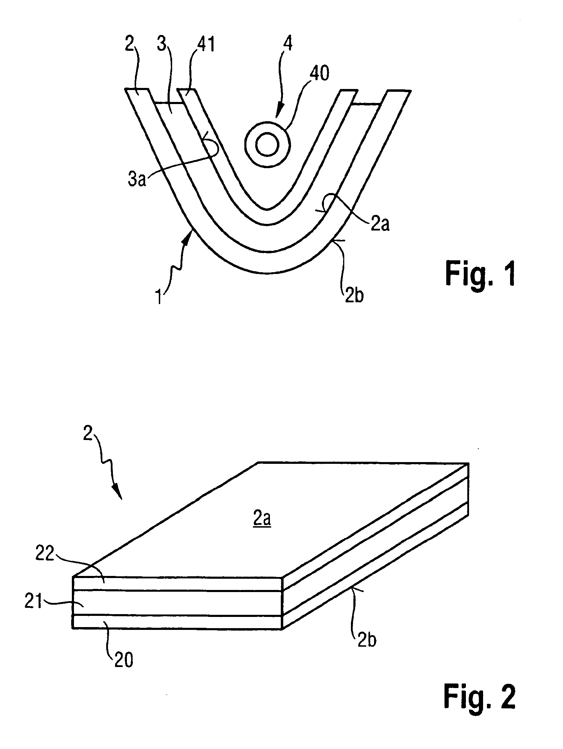

The dissipative vibration damping device 1 shown in figure 1 comprises a U-shaped carrier 2 having an inner surface 2a and an outer surface 2b. A bonding layer 3 comprising a two-component epoxy resin foam is applied to the inner surface 2a. The initial thickness of the bonding layer 3 is selected such that there remains a clearance of about 2mm between the inner surface 3a of the bonding layer 3 and a structure 4 to be treatened, for example.

The U-shaped carrier 2, which can be seen in more detail in figure 2 is made of a viscoelastic sandwich material comprising three layers 20, 21, 22 in stacked arrangement.

The outer layers 20, 22 of the carrier 2 are made of metal sheets having a thickness of 0.5mm each. Preferred metals are galvanised steel and aluminium.

The intermediate layer 21 of the carrier consists of a viscoelastic rubber material having a thickness of 1.5 mm and an area weight of about 1.2 kg/m$^2$ and is securely bonded to the outer layers 20, 22 thus constituting a three layer structure.

As an alternative the carrier 2 could be made of a single layer using a suitable synthetic material showing dissipative properties. When using a synthetic material, this may optionally be fiber re-enforced. The synthetic materials are selected from those hereabove recited. The thickness of the carrier 2 is approximately 2.5 mm.

The following non-limiting example illustrates the invention and the manner of practising the same.

As shown in figure 1, the dissipative vibration damping device 1 is fixed onto a structural element 4 of a car body, for example onto a rear suspension system having a suspension rail 41 and an anti-banking beam 40 with the bonding layer 3 facing the structural element 4. The dissipative vibration damping device has a carrier (2) approximately U-shaped having dimensions as to partly surround the structural element 4 while maintaining the clearance between the applied bonding layer 3 and the structural element 4 as referred above (in this case about 2 mm between the bonding layer 3 and the structural element 4).

After the fixation of the dissipative vibration damping device 1, the structural element 4 is heated to a temperature of 180 °C for 20 min in order to cause expansion of the bonding layer 3 in the space between the inner surface 2a of the carrier 2 and the outer surface of the structural element 4. After the heating, the bonding layer 3 has an enlarged thickness so that it is in connecting contact with the structural element 4. The expansion can be realising during the passage of the vehicle parts in the electro coating bath.

In other examples, the dissipative vibration damping device 1 can be selected such that the clearance between the outer surfaces of the dissipative vibration damping device 1 and the surfaces of the structural element 4 is about 1 to 20 mm. In all these cases, after the heating, the bonding layer 3 occupies all the clearance.

As an alternative a bonding layer 3 can be used which allows expansion without a heating process, for example due to chemical reaction of its components. The bonding layer 3 should have a young modulus of 1 to 10,000 MPa, preferably 500 to 2,000 MPa.

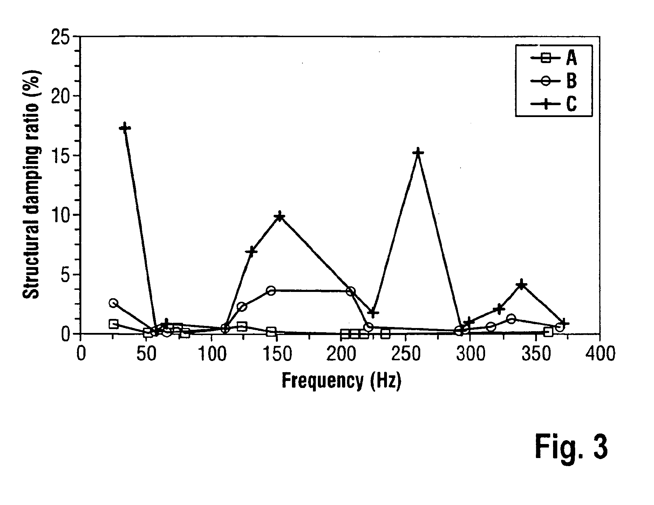

The figure 3 shows the results of an experimentation carried out using a real structural element of a car. In this experiment, the dissipative vibration damping device is located on the rear suspension system.

A dynamic shaker is used as vibration generator and is attached at a free end of the structural member and provides an excitation in the low frequency range from 20 Hz up to 380 Hz.

The injected vibration is measured by means of a force sensor located at the entry point.

The response is measured by means of accelerometers in form of the structural damping ratio.

Three experiments are conducted:

- without any added damping material on the vibration transfer path (curve A on Figure 3).
- a dissipative vibratory wave barrier according to the unpublished European Patent Application EP 05292082.4 is used (curve B on Figure 3).
- the dissipative vibration damping device according to the invention as described below is used (curve C on Figure 3).

The dissipative vibration damping device according to the invention had a carrier 2 consisting of two outer layers 20, 22 of steel, each 0.5 mm thick. There between there was located a layer 21 consisting of a viscoelastic rubber material in a thickness of 1.5 mm. This dissipating carrier may contain a conventional sound damping material known in the art. Examples can be found in the "Terophon®" product range of the applicant. For example, a suitable sound damping material comprises, in % by weight:

8 to 15 % of butyl rubber,

20 to 40 % of polyolefins, preferably selected from polyisobutylene, polybutene, or mixtures thereof,

10 to 15 % of aliphatic hydrocarbon resin,

2 to 10 % of formaldehyde resin,

the remainder to 100 % being fillers selected from, for example, barium sulphate, calcium oxide, calcium carbonate, muscovite, quarz, and carbon black.

Alternatively, the sound damping material may comprise, in % by weight:

40 to 70 % of polyolefins, preferably selected from polyisobutylene, polybutene, or mixtures thereof,

the remainder to 100 % being fillers selected from, for example, barium sulphate, calcium oxide, calcium carbonate, muscovite, quarz, and carbon black

Furthermore, the sound damping materials described in the working examples of EP 697277 or EP 617098 may be used for the present invention.

Thus, a three layer viscoelastic sandwich material of the structure as shown in figure 2 was used as the carrier 2.

The layer 21 had an area weight of 1.2 kg/m$^2$ and a loss factor according to DIN 53440 of at least 0.10 at -15°C up to +65 °C.

The carrier 2 showed less stiffness than the structural element 4.

The material for the bonding layer 3 may be selected from conventional foamable reinforcing materials known in automotive manufacturing. For examples, such materials are available from the applicant under the trade name of "Terocore®". They usually are mixtures of epoxy resins, modifiers, curing agents, blowing agents, and light weight fillers. Examples of suitable materials can be found in the description and the working examples of WO03/054069, WO00/52086, and WO2004/065485.

In the available embodiment a material was employed which is commercially available under the brand name "TEROCORE®" in the product range of the applicant. This bonding layer 3 showed a density in uncured state of about 0.75 to 0.95 kg/m$^3$ and about 0.55 to 0.65 kg/m$^3$ in the cured state. It's water absorption was less than 5 % and the compression strength was at least 10.5 Mpa. During expansion it showed an expansion rate of about 55 to 65 %.

From curves A, B and C, it appears that in the given frequency range the present invention yields to considerably improved vibration damping and significant noise reduction.

The principal advantages of the invention are as follows:

- much less material is necessary to damp the vibration of the structure to be treatened,
- the use of the dissipative vibration damping device according to the invention is much cheaper in term of process costs for the car or machinery manufacturer compared to the application of damping material according to the prior art,
- since the carrier is dissipative and therefore shows less stiffness than the structure to be treatened the dissipative vibration damping device according to the invention is very lightweight.

The use of the dissipative vibratory wave barrier according to the invention may also contribute to the rigidity of the treatened structure thus improving the safety and comfort of the vehicle.

**Claims**

1. A dissipative vibration damping device (1), comprising a carrier (2) having an inner surface and an outer surface, the carrier comprising on at least one surface thereof a bonding layer (3), wherein the carrier (2) is dissipative and has a damping loss factor of at least 0,2, **characterized in that** the bonding layer (3) is made of a rigid material with higher stiffness than the carrier (2).

2. The dissipative vibration damping device (1) according to claim 1, wherein the carrier (2) is made of a synthetic material, optionally fiber re-enforced, and especially of a thermoplastic synthetic material, selected within the group consisting of polyamides (PA), polyphenylene sulphide (PPS), polyphenylene ether (PPE), polyphenylene sulfone (PPSU) and polyphenyle-imide (PPI), the thermoplastic synthetic material being optionally fiber re-enforced, having a low water absorption and a stability of dimension up to 180°C.

3. The dissipative vibration damping device (1) according to claim 1, wherein the carrier (2) is made of a viscoelastic sandwich material of at least two layers.

4. The dissipative vibration damping device (1) according to claim 3, wherein the sandwich material comprises at least one layer made of metal, and especially of steel or of aluminium and at least one layer based on a viscoelastic rubber material.

5. The dissipative vibration damping device (1) according to claim 4, wherein the viscoelastic rubber material has a loss factor according to DIN 53440 of at least 0.10 in a temperature range of -15°C to +65 °C.

6. The dissipative vibration damping device (1) according to any of claims 4 to 5, wherein the viscoelastic rubber material has an area weight of 1.0 to 2.0 kg/m$^2$, preferably 1.2 kg/m$^2$.

7. The dissipative vibration damping device (1) according to any of the claims 1 to 6, wherein the carrier (2) has a damping loss factor of at least 0.5.

8. The dissipative vibration damping device (1) according to any of claims 1 to 7, wherein the bonding layer (3) comprises a two-component epoxy resin foam having a density in uncured state of 0.75 to 0.95 kg/m$^3$ and a water absorption of less than 5 %.

9. The dissipative vibration damping device (1) according to any of claims 1 to 8, wherein the bonding layer (3) has a compression strength of at least 10.5 MPa.

10. The dissipative vibration damping device (1) according to any of the claims 1 to 9, wherein the bonding layer (3) has a Young modulus of 1 to 10,000 MPa, preferably 500 to 2,000 MPa.

11. A system comprising a structural element (4) and a dissipative vibration damping device (1) according to any of claims 1 to 10, wherein the dissipative vibration damping device (1) is connected to the structural element by the bonding layer (3) of the dissipative damping device (1) and the carrier of the dissipative damping device having a lower stiffness than the structural element (4).

12. A method for reducing the transfer of vibrations from a vibration generator to a location to which the vibration generator is connected via a structural element, comprising equipping said structural element with means for dissipating the vibrational energy generated by the vibration generator, **characterized in that** those means comprise a dissipative vibration damping device according to any of claims 1 to 10.

13. The method according to claim 12 for reducing the transfer of vibrations from one of the vibration generators comprised within an automobile vehicle to at least one constitutive parts of the passenger compartment, to which the vibration generator is connected via a structural element (4) having the form of a tubular rail with a polygonal, particularly a rectangular cross-section, comprising, successively,

   - selecting an dissipative vibration damping device (1) according to any of claims 1 to 10 having dimensions such that it can be inserted into or fixed onto the structural element (4), with the stiffness of the carrier (2) being lower than the stiffness of the structural element (4),
   - inserting the dissipative vibration damping device (1) into or fixing the dissipative vibration damping device (1) onto the structural element (4) in a location close to the vibration generator and connecting the dissipative vibration damping device (1) with the structural element(4) by the bonding layer (3).

14. The method according to any of the claims 12 or 13, wherein the bonding layer (3) is expanded upon heating.

15. The method according to claim 14, wherein the dimensions of the dissipative vibration damping device (1) are selected such that a clearance of about 1 to 10 mm between the surface of the dissipative vibration damping device (1) facing the surface of the structural element (4) is obtained and the clearance is closed upon heating.

**Patentansprüche**

1. Dissipative Schwingungsdämpfungsvorrichtung (1), umfassend einen Träger (2) mit einer inneren Oberfläche und einer äußeren Oberfläche, wobei der Träger an mindestens einer Oberfläche davon eine Haftschicht (3) umfasst, wobei der Träger (2) dissipativ ist und einen Dämpfungsverlustfaktor von mindestens 0,2 aufweist, **dadurch gekennzeichnet, dass** die Haftschicht (3) aus einem starren Material mit einer höheren Steifigkeit als der Träger (2) besteht.

2. Dissipative Schwingungsdämpfungsvorrichtung (1) nach Anspruch 1, wobei der Träger (2) aus einem synthetischen, gegebenenfalls faserverstärkten Material und insbesondere einem thermoplastischen synthetischen Material besteht, das ausgewählt ist aus der Gruppe bestehend aus Polyamiden (PA), Polyphenylensulfid (PPS), Polyphenylenether (PPE), Polyphenylensulfon (PPSU) und Polyphenylimid (PPI), wobei das thermoplastische synthetische Material gegebenenfalls faserverstärkt ist und eine niedrige Wasseraufnahme sowie eine Maßhaltigkeit bis 180°C aufweist.

3. Dissipative Schwingungsdämpfungsvorrichtung (1) nach Anspruch 1, wobei der Träger (2) aus einem viskoelastischen Verbundwerkstoff aus mindestens zwei Schichten besteht.

4. Dissipative Schwingungsdämpfungsvorrichtung (1) nach Anspruch 3, wobei der Verbundwerkstoff mindestens eine Schicht aus Metall, und insbesondere aus Stahl oder Aluminium, sowie mindestens eine Schicht auf Basis eines viskoelastischen Gummimaterials umfasst.

5. Dissipative Schwingungsdämpfungsvorrichtung (1) nach Anspruch 4, wobei das viskoelastische Gummimaterial einen Verlustfaktor nach DIN 53440 von mindestens 0,10 im Temperaturbereich von -15°C bis +65°C aufweist.

6. Dissipative Schwingungsdämpfungsvorrichtung (1) nach irgendeinem der Ansprüche 4 bis 5, wobei das viskoelastische Gummimaterial eine flächenbezogene Masse von 1,0 bis 2,0 kg/m$^2$, vorzugsweise 1,2 kg/m$^2$, aufweist.

7. Dissipative Schwingungsdämpfungsvorrichtung (1) nach irgendeinem der Ansprüche 1 bis 6, wobei der Träger (2) einen Dämpfungsverlustfaktor von mindestens 0,5 aufweist.

8. Dissipative Schwingungsdämpfungsvorrichtung (1) nach irgendeinem der Ansprüche 1 bis 7, wobei die Haftschicht (3) einen Zweikomponenten-Epoxidharzschaum umfasst, der eine Dichte von 0,75 bis 0,95 kg/m$^3$ in ungehärtetem Zustand und eine Wasseraufnahme von unter 5% aufweist.

9. Dissipative Schwingungsdämpfungsvorrichtung (1) nach irgendeinem der Ansprüche 1 bis 8, wobei die Haftschicht (3) eine Druckfestigkeit von mindestens 10,5 MPa aufweist.

**10.** Dissipative Schwingungsdämpfungsvorrichtung (1) nach irgendeinem der Ansprüche 1 bis 9, wobei die Haftschicht (3) einen Youngschen Modul von 1 bis 10.000 MPa, vorzugsweise 500 bis 2.000 MPa, aufweist.

**11.** System umfassend ein Strukturelement (4) und eine dissipative Schwingungsdämpfungsvorrichtung (1) nach irgendeinem der Ansprüche 1 bis 10, wobei die dissipative Schwingungsdämpfungsvorrichtung (1) durch die Haftschicht (3) der dissipativen Dämpfungsvorrichtung (1) mit dem Strukturelement verbunden ist und der Träger der dissipativen Dämpfungsvorrichtung eine niedrigere Steifigkeit als das Strukturelement (4) aufweist.

**12.** Verfahren zur Reduzierung der Schwingungsübertragung von einem Schwingungserzeuger zu einer Stelle, mit welcher der Schwingungserzeuger über ein Strukturelement verbunden ist, umfassend das Ausrüsten des Strukturelements mit Mitteln zur Dissipation der vom Schwingungserzeuger erzeugten Schwingungsenergie, **dadurch gekennzeichnet, dass** diese Mittel eine dissipative Schwingungsdämpfungsvorrichtung nach irgendeinem der Ansprüche 1 bis 10 umfassen.

**13.** Verfahren nach Anspruch 12 zur Reduzierung der Schwingungsübertragung von einem der in einem Kraftfahrzeug umfassten Schwingungserzeuger zu mindestens einem Bestandteil des Fahrgastraums, mit welchem der Schwingungserzeuger über ein Strukturelement (4) verbunden ist, das die Gestalt einer rohrförmigen Schiene mit einem vieleckigen, insbesondere rechteckigen Querschnitt aufweist, Folgendes nacheinander umfassend:

- Auswählen einer dissipativen Schwingungsdämpfungsvorrichtung (1) nach irgendeinem der Ansprüche 1 bis 10 mit derartigen Abmessungen, dass sie in das Strukturelement (4) eingesetzt oder daran befestigt werden kann, wobei die Steifigkeit des Trägers (2) niedriger als die Steifigkeit des Strukturelements (4) ist,
- Einsetzen der dissipativen Schwingungsdämpfungsvorrichtung (1) in das Strukturelement (4) oder Befestigen der dissipativen Schwingungsdämpfungsvorrichtung (1) am Strukturelement (4) in einer Stelle nahe dem Schwingungserzeuger sowie Verbinden der dissipativen Schwingungsdämpfungsvorrichtung (1) mit dem Strukturelement (4) mittels der Haftschicht (3).

**14.** Verfahren nach irgendeinem der Ansprüche 12 oder 13, wobei die Haftschicht (3) bei Erwärmung ausgedehnt wird.

**15.** Verfahren nach Anspruch 14, wobei die Abmessungen der dissipativen Schwingungsdämpfungsvorrichtung (1) derart ausgewählt werden, dass ein Zwischenraum von ungefähr 1 bis 10 mm zwischen der Oberfläche der dissipativen Schwingungsdämpfungsvorrichtung (1) und der gegenüberliegenden Oberfläche des Strukturelements (4) erhalten wird und der Zwischenraum bei Erwärmung geschlossen wird.

**Revendications**

**1.** Dispositif dissipatif d'amortissement des vibrations (1), comprenant un support (2) ayant une surface interne et une surface externe, le support comprenant sur au moins une surface de celui-ci une couche de liaison (3), dans lequel le support (2) est dissipatif et a un facteur de perte d'amortissement d'au moins 0,2, **caractérisé en ce que** la couche de liaison (3) est constituée d'un matériau rigide avec une rigidité supérieure à celle du support (2).

**2.** Dispositif dissipatif d'amortissement des vibrations (1) selon la revendication 1, dans lequel le support (2) est constitué d'un matériau synthétique, éventuellement renforcé de fibres, et spécialement d'un matériau synthétique thermoplastique, choisi parmi le groupe constitué des polyamides (PA), du sulfure de polyphénylène (PPS), de l'éther de polyphénylène (PPE), de la polyphénylène sulfone (PPSU) et du polyphényle-imide (PPI), le matériau synthétique thermoplastique étant éventuellement renforcé de fibres, ayant une faible absorption d'eau et une stabilité dimensionnelle allant jusqu'à 180°C.

**3.** Dispositif dissipatif d'amortissement des vibrations (1) selon la revendication 1, dans lequel le support (2) est constitué d'un matériau viscoélastique en sandwich d'au moins deux couches.

**4.** Dispositif dissipatif d'amortissement des vibrations (1) selon la revendication 3, dans lequel le matériau en sandwich comprend au moins une couche constituée de métal, et spécialement d'acier ou d'aluminium et d'au moins une couche à base d'un matériau viscoélastique de caoutchouc.

**5.** Dispositif dissipatif d'amortissement des vibrations (1) selon la revendication 4, dans lequel le matériau viscoélastique de caoutchouc a un facteur de perte selon la norme DIN 53440 d'au moins 0,10 dans une plage de températures de -15°C à +65°C.

**6.** Dispositif dissipatif d'amortissement des vibrations (1) selon l'une quelconque des revendications 4 à 5, dans lequel le matériau viscoélastique de caoutchouc a une masse surfacique de 1,0 à 2,0 kg/m², de préférence 1,2 kg/m².

7. Dispositif dissipatif d'amortissement des vibrations (1) selon l'une quelconque des revendications 1 à 6, dans lequel le support (2) a un facteur de perte d'amortissement d'au moins 0,5.

8. Dispositif dissipatif d'amortissement des vibrations (1) selon l'une quelconque des revendications 1 à 7, dans lequel la couche de liaison (3) comprend une mousse de résine époxy à deux composants ayant une densité à l'état non réticulé de 0,75 à 0,95 kg/m³ et une absorption d'eau inférieure à 5%.

9. Dispositif dissipatif d'amortissement des vibrations (1) selon l'une quelconque des revendications 1 à 8, dans lequel la couche de liaison (3) a une résistance à la compression d'au moins 10,5 MPa.

10. Dispositif dissipatif d'amortissement des vibrations (1) selon l'une quelconque des revendications 1 à 9, dans lequel la couche de liaison (3) a un module de Young de 1 à 10 000 MPa, de préférence de 500 à 2 000 MPa.

11. Système comprenant un élément structurel (4) et un dispositif dissipatif d'amortissement des vibrations (1) selon l'une quelconque des revendications 1 à 10, dans lequel le dispositif dissipatif d'amortissement des vibrations (1) est connecté à l'élément structurel par la couche de liaison (3) du dispositif dissipatif d'amortissement (1) et le support du dispositif dissipatif d'amortissement ayant une rigidité inférieure à celle de l'élément structurel (4).

12. Procédé de réduction du transfert des vibrations provenant d'un générateur de vibrations à un emplacement auquel le générateur de vibrations est relié *via* un élément structurel, comprenant le fait d'équiper ledit élément structurel de moyens de dissiper l'énergie vibrationnelle générée par le générateur de vibrations, **caractérisé en ce que** ces moyens comprennent un dispositif dissipatif d'amortissement des vibrations selon l'une quelconque des revendications 1 à 10.

13. Procédé selon la revendication 12, de réduction du transfert des vibrations de l'un des générateurs de vibrations contenus dans un véhicule automobile au niveau d'au moins l'une des pièces constitutives de la cabine passagers, à laquelle le générateur de vibrations est relié *via* un élément structurel (4) ayant la forme d'un rail tubulaire avec une section transversale polygonale, particulièrement rectangulaire, comprenant, successivement,

- le choix d'un dispositif dissipatif d'amortissement des vibrations (1) selon l'une quelconque des revendications 1 à 10 ayant des dimensions telles qu'il peut être inséré dans ou fixé sur l'élément structurel (4), avec la rigidité du support (2) étant inférieure à la rigidité de l'élément structurel (4),
- l'insertion du dispositif dissipatif d'amortissement des vibrations (1) dans ou la fixation du dispositif dissipatif d'amortissement des vibrations (1) sur l'élément structurel (4) dans un emplacement proche du générateur de vibrations et la connexion du dispositif dissipatif d'amortissement des vibrations (1) à l'élément structurel (4) par la couche de liaison (3).

14. Procédé selon l'une quelconque des revendications 12 ou 13, dans lequel la couche de liaison (3) est expansée à l'issue d'un chauffage.

15. Procédé selon la revendication 14, dans lequel les dimensions du dispositif dissipatif d'amortissement des vibrations (1) sont choisies de sorte qu'un espace libre d'environ 1 à 10 mm entre la surface du dispositif dissipatif d'amortissement des vibrations (1) faisant face à la surface de l'élément structurel (4) est obtenu et l'espace libre est fermé à l'issue d'un chauffage.

Fig. 1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 3514753
- DE 3444863
- EP 1772480 A
- EP 0077987 A
- EP 05292082 A
- EP 697277 A
- EP 617098 A
- WO 03054069 A
- WO 0052086 A
- WO 2004065485 A